# EUROPÄISCHE PATENTANMELDUNG

(11) **EP 3 141 338 A1**
(43) Veröffentlichungstag der Anmeldung: **15.03.2017**
(21) Anmeldenummer: 16400038.2
(22) Anmeldetag: 01.09.2016
(51) Int. Cl.: B23Q 3/08

(54) **WERKSTÜCK-SPANNKÖRPER MIT INTEGRIERTEN LEITUNGSSYSTEMEN**

(30) Priorität: 08.09.2015 DE 102015012280
(71) Anmelder: WVL Werkzeug- und Vorrichtungsbau Lichtenstein GmbH, DE-09356 St. Egidien (DE)
(72) Erfinder: Görner, Frank, 09337 Hohenstein (DE); Wötzel, Kay, 08297 Zwönitz (DE)
(74) Vertreter: Grosse, Ulrich

(57) **Zusammenfassung**

Nebeneinander und gleichgerichtet auf Spannplatten angeordnete sowie hydraulisch betätigte Außen-Schwenkspanner und Innenzugspanner sind über eine Außenverrohrung, über flexible Hochdruckschläuche oder mittels nur eines Druckmediennetzes (3) von tieflochgebohrten, längs und quer in der Spannplatte verlaufenden Dünnbohrungen (1.6) mit einander und mit einem externen Druckerzeuger leitungsverbunden.

Demgegenüber verfügt ein Werkstück-Spannkörper (1), der mit einem System derartiger tieflochgebohrter Dünnbohrungen (1.6) ausgestattet ist, über eine Vielzahl von integrierten Druckmediennetzen (3), um einen möglichst großen Anteil des Arbeitsraumes der Werkzeugmaschine für die Werkstückspannung zu nutzen.
Nach einer Druckmedium-Zweigung (3.7) sind unabhängige Druckmediennetze für Positionieren, Außen-Spannen, Innen-Spannen, Stützen und auch für Zustandsfeststellungen (3.2 bis 3.5) werkstückabhängig anorden- und installierbar.

## Beschreibung

Die Erfindung geht von dem im Oberbegriff des Patentanspruches 1 definierten Werkstück-Spannkörper einer mit Spanndruckmedien betriebenen Spannvorrichtung aus. Mit Hydraulik-Öl und mit Druckluft sind die auf einer Werkzeugmaschine zu bohrenden und zu fräsenden Werkstücke zu positionieren, zu fixieren und ergänzend abzustützen, und nach ihrer spanenden Bearbeitung zu entspannen und zu wechseln, worüber intelligent der Bediener zu informieren ist.

Die bekannten Ausbildungsvarianten für Leitungssysteme, durch die das Spanndruckmedium an die beweglichen und druckausübenden Funktionselemente einer Spannvorrichtung herangeführt wird, sind
- Außenverrohrungen, die entlang der Außenflächen am Werkstückspannkörper geführt sind,
- flexible Hochdruckschläuche, die wie beispielhaft in
   - DE 202 02 891 U1
   beschrieben, auf von der Fertigung der Werkstücke abgewandten Rück- oder Unterseite von Spannplatten oder Spannkörpern angeordnet sind, und
- tieflochgebohrte Hydraulikleitungen, die wie in
   - DE 10 2011 086 853 A1
   - DE 20 2011 106 409 U1 und
   - DE 20 2012 001 539 U1
   vorgeschlagen, in nur einer Ebene in Spannplatten, in Paletten und in Segmentplatten längs- und quergerichtet verlaufend, ausschließlich nebeneinander angeordnete Hydraulik-Spannstellen miteinander und mit einem externen Druckerzeuger druckübertragend und druckausgleichend zu verbinden, wobei in der Regel zu den Spannstellen hin, ergänzende Außenverrohrungen und Hochdruckschläuche anzuordnen sind.

Die Nachteile dieser Ausbildungsvarianten bestehen im Wesentlichen darin, dass
- mehrere Seiten eines Werkstück-Spannkörpers bei Außenverrohrungen und Anwendung flexibler Hochdruckschläuche für die Werkstückspannung nicht nutzbar sind,
- ein größerer Anteil des Arbeitsraumes in Werkzeugmaschinen als benötigter Raum für die Werkstückspannung, insbesondere für die Mehrteilespannung auf Werkstück-Spannkörpern nicht zur Verfügung steht,
- die Ableitung sowie die Säuberung von Bearbeitungsspänen einen höheren Investitions- oder Reinigungs-Aufwand erforderlich machen,
- eine ausschließliche Ein-Ebenen-Anordnung tieflochgebohrter HydraulikLeitungen eine kostenaufwendigere Struktur der Leitungssysteme an den dann größer zu dimensionierenden Werkstück-Spannkörpern erfordert und
- ein zu großer Mindestabstand bei Anwendung der in der Regel großräumig strukturierten Norm-Spannelemente einzuhalten ist.

Davon leitet sich die Problemstellung ab, die Werkstück-Spannkörper so auszubilden, dass
- eine effizientere Nutzung des Werkzeugmaschinen-Arbeitsraumes als Spannraum für Werkstücke möglich wird,
- Späneschutzabdeckungen für Außenverrohrungen und flexible Hochdruckschläuche entfallen können,
- eine Aufwandsreduzierung bei der Säuberung der Spannvorrichtung von den Bearbeitungsspänen eintritt,
- eine Strukturvereinfachung und vereinfachte Bedienertätigkeit durch Vermeidung kombinierter Außen- und Innen-Leitungssysteme und eindeutigere Zustandsfeststellungen möglich werden und
- eine gering beabstandete kleinräumige sowie kleinflächige Spanndruck-Ausübung auf die Werkstücke bei einer Mehrteile-Spannung mit geringem Abstand der Spannstellen realisierbar ist.

Diese Problemstellung wird durch die Merkmale des Patentanspruches 1 gelöst.

Alle in die Grundplatte, in die Spannwand oder in den Zwischenkörper mit Spannplatte sowie in die Kopfplatte eines Werkstück-Spannkörpers integrierten, zueinander und zu den Außenflächen parallel verlaufend sowie sich kreuzend angeordneten, Leitungen für den Durchlass von Spanndruckmedien sind tieflochgebohrte, lange und mit zunehmender Bohrungstiefe durchmessereduzierte Dünnbohrungen. Diese bilden ein geschlossenes Leitungssystem, welches ausgehend von einer gemeinsamen Druckerzeugungsstelle in einer spanenden Werkzeugmaschine, oder autark in dem Werkstück-Spannkörper der Spannvorrichtung selbst, über eine Drehdurchführung im Werkzeugmaschinentisch oder über andere Druckmedien-Eintrittsstellen unabhängig agierend und ventilgesteuert trennbare Druckmediennetze gezweigt ist. Ein koordiniert zeitversetztes Agieren aller beweglichen Funktionselemente, die als Positionierelemente, Zentrierspanner, Außen-Schwenkspanner, Innenzugspanner sowie ergänzende Werkstückstützer oder auch als Airsensorik-Zustandsfeststeller ausgebildet sind, erfolgt funktionell getrennt. An den Bohrungsaustrittstellen der Dünnbohrungen am Werkstückspannkörper sind diese, druckhaltend abgedichtet, mit den Druckkammern der beweglichen Funktionselemente druckausgleichend in gleicher Spanndruck-Dimension leitungsverbunden.

Ergänzende Merkmale der Erfindung sind in den Patentansprüchen 2 bis 4 benannt. Sie betreffen
- die funktionelle Zuordnung gezweigter Druckmediennetze,
- die Ausbildung und die Steuerung der schwenkbeweglichen Spannhaken an Außen- und Innen-Spannelementen sowie
- die Anordnung von Zentrierspannern und ihr funktionelles Betreiben mit einem eigenen Druckmediennetz.

Die Erfindung ist in sieben Figuren dargestellt und mit zwei Ausführungsbeispielen im folgenden Teil der Beschreibung näher erläutert.

Gezeigt werden in
- Fig. 1: eine 3D-Ansicht einer Spannvorrichtung mit einem Werkstück-Spannkörper, auf dem ein gehäuseförmiges Werkstück positioniert und fixiert ist,
- Fig. 2: eine vereinfachte Darstellung der Leitungssysteme im Werkstück-Spannkörper nach Fig. 1,
- Fig. 3: eine 3D Ansicht einer Mehrteile- und Mehrseiten-Spannvorrichtung mit einem doppel-T-förmigem Werkstück-Spannkörper,
- Fig. 4: eine vereinfachte Darstellung der Leitungssysteme im Werkstück-Spannkörper nach Fig. 3 und in
- Fig. 5: bis Fig. 7 eine Vorderansicht- sowie Querschnitt-Darstellungen eines Positionierkörpers und seines Druckmediennetzes in der Spannvorrichtung in Fig. 1.

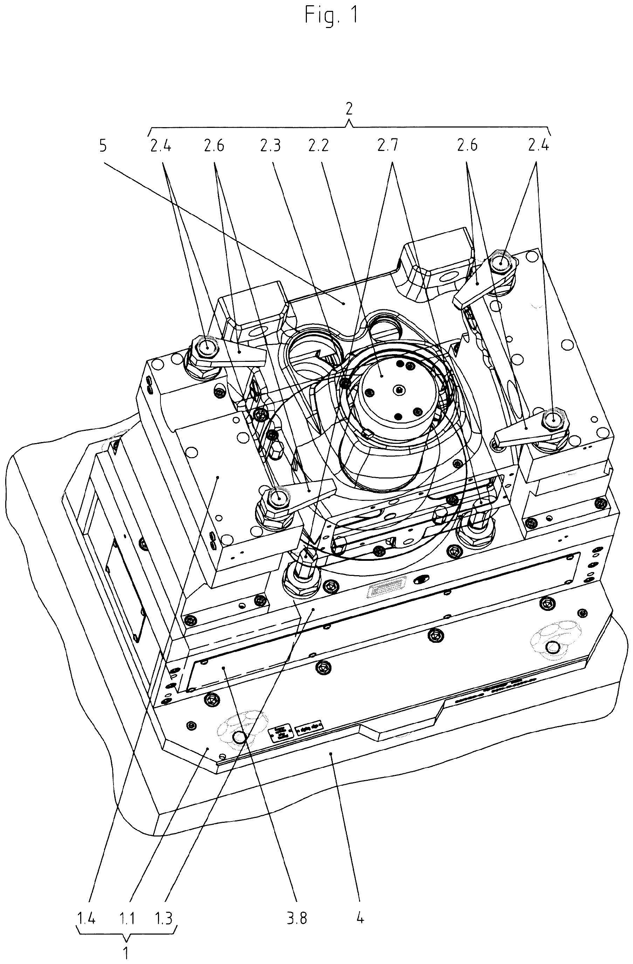

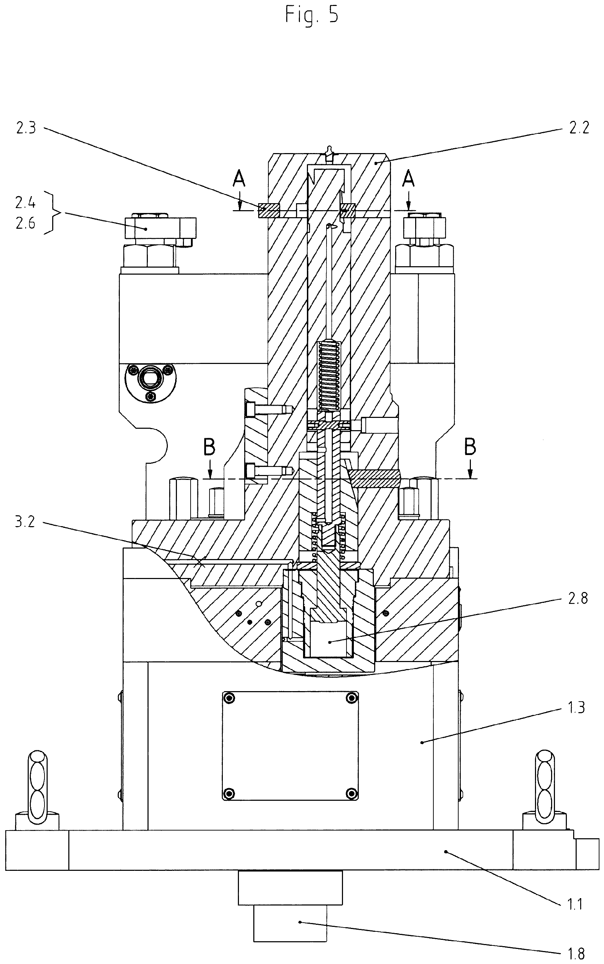

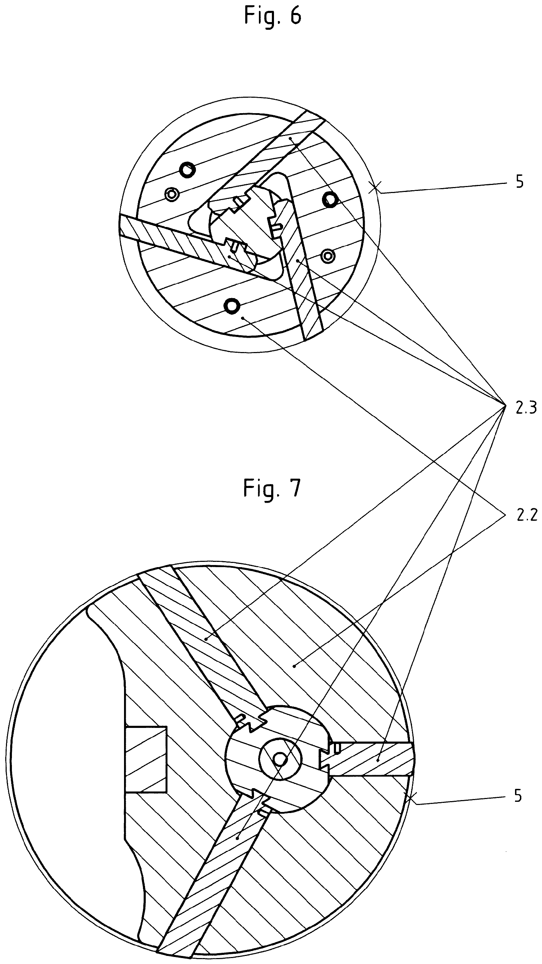

Der in Fig. 1 dargestellte, auf den Werkzeugmaschinentisch 4 angeordnete, Werkstück-Spannkörper 1 besteht im wesentlichen aus der Grundplatte 1.1, aus dem Zwischenkörper 1.3 und aus einer Spannplatte 1.4, auf der das aufliegende Werkstück 5 mittels vier Außen-Schwenkspannern 2.4 über deren schwenkbewegliche Spannhaken 2.6 gespannt ist. Das Werkstück 5 war vor Beginn der Spannung über seine Mittenbohrung mittels des Zentrierspanners 2.2 und dessen Zentrierbacken 2.3, mittels fester Werkstückauflagen und beweglicher Werkstückstützer 7 in seiner Spannlage, die auch die Bearbeitungslage für die spanende Bearbeitung ist, positioniert. In dem Spannkörper 1.3 sind, in einer kompakten Bauweise ausgebildet, die Druck- und Funktionssteuerungs-Ventile 3.8 angeordnet. Die für die Positionierung und Spannung des Werkstückes 5 funktionswesentlichen beweglichen Funktionselemente Zentrierspanner 2.2 mit Zentrierbacken 2.3, Außen-Schwenkspanner 2.4 mit Spannhaken 2.6 sowie das von einer Druckkammer 8 aus betreibbare Druckmediennetz Positionieren 3.2 sind ergänzend in den Fig. 5, 6 und 7 dargestellt. Die mittels Federkraft das Werkstück 5 zentrierenden Zentrierbacken 2.3 des Zentrierspanners 2.2 werden von der Druckkammer 2.8 ausgehend, mittels des Druckmediennetzes Positionieren 3.2 hydraulisch entpositioniert und, nach dem Entspannen durch die zurückgeschwenkten Spannhaken 2.6 der Außen-Schwenkspanner 2.4 in das Werkstück 5 für den Werkstückwechsel durch den Bediener freigegeben.

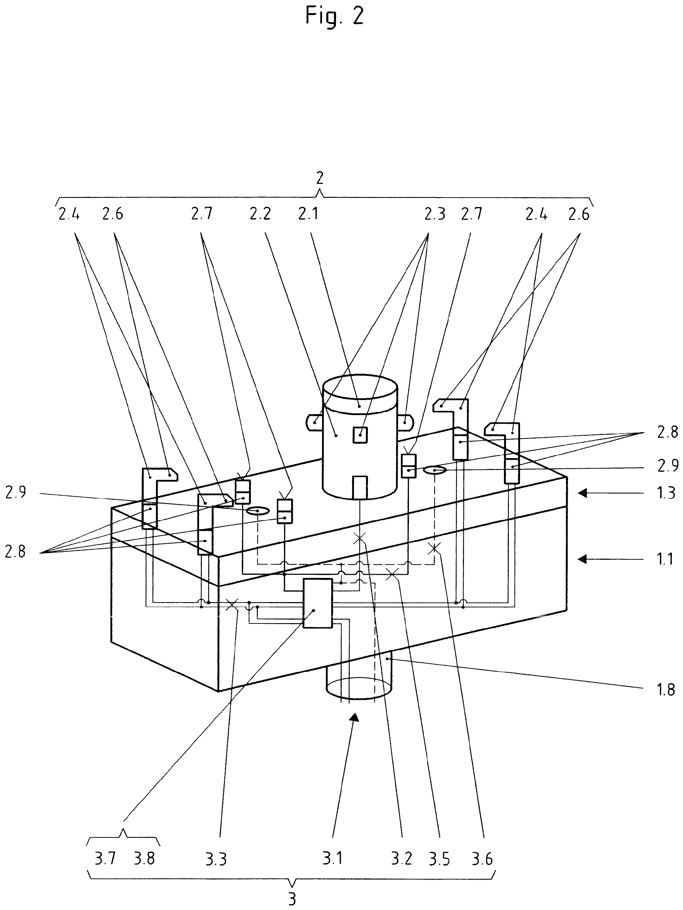

In Fig. 2 ist dargestellt, wie die in dem Werkstück-Spannkörper 1 der in Fig. 1 dargestellten Spannvorrichtung integrierten Leitungssysteme über die von der Druckmedien-Eintrittsstelle 3.1 an der Drehdurchführung 1.8 ausgehenden und dann gezweigten fünf Druckmediennetze 3 für die Funktionsrealisierung der beweglichen Funktionselemente 2 angeordnet und über die Druck- und Funktionssteuerungs-Ventile 3.8 gesteuert sind.
So agieren zeitversetzt über ihre Druckkammern 2.8
- die Positionierelemente 2.1 mittels Druckmediennetz Positionieren 3.2,
- der Zentrierspanner 2.2 mittels Druckmediennetz Innenspannen 3.4,
- die Außen-Schwenkspanner 2.4 mittels Druckmediennetz Außenspannen 3.3
   und
- die Werkstückstützer 2.7 mittels Druckmediennetz Stützen 3.5 unter Einsatz von Hydraulik-Öl
sowie
- die Airsensorik-Zustandsfeststeller 2.9 mittels Druckmediennetz Zustandsfeststellungen 3.6 nach dem Airsensorik-Prinzip.
Dafür ist die im unteren Teil des Werkstück-Spannkörpers 1 angeordnete Grundplatte 1.1 mit allen waagerecht verlaufenden, als Dünnbohrungen ausgebildeten Leitungen und deren senkrecht nach unten zur Drehdurchführung 1.8 sowie nach oben, sich im Spannkörper 1.3 und mit den zu den darüber befindlichen beweglichen Funktionselementen 2 und deren jeweiligen Druckkammern 2.8 fortsetzenden gerichteten senkrechten Anschlussleitungen ausgestattet.

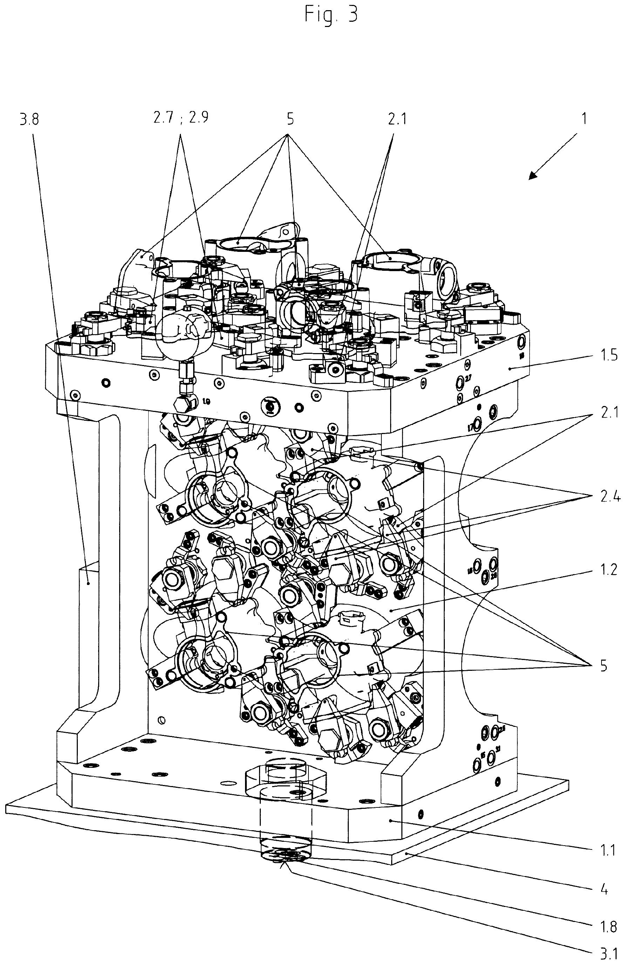

Der in Fig. 3 dargestellte, ebenfalls auf einem Werkzeugmaschinentisch 4 angeordnete, Werkstück-Spannkörper 1 besteht im wesentlichen aus der Grundplatte 1.1, aus der Spannwand 1.2 und aus der Kopfplatte 1.5. Die deckeiförmigen Werkstücke 5 sind auf der Kopfplatte 1.5 aufliegend und an der Spannwand 1.2 anliegend mit jeweils drei Außen-Schwenkspannern 2.4 über deren schwenkbewegliche Spannhaken 2.6 gespannt, nachdem sie mit festen Werkstückauflagen und zwei Werkstückstützern 2.7 lagegenau positioniert sind. In einer für die Werkstückspannung nicht genutzten Seitenlage an der Spannwand sind, in kompakter Bauweise ausgebildet, die Druck- und Funktionssteuerungs-Ventile 3.8 angeordnet.

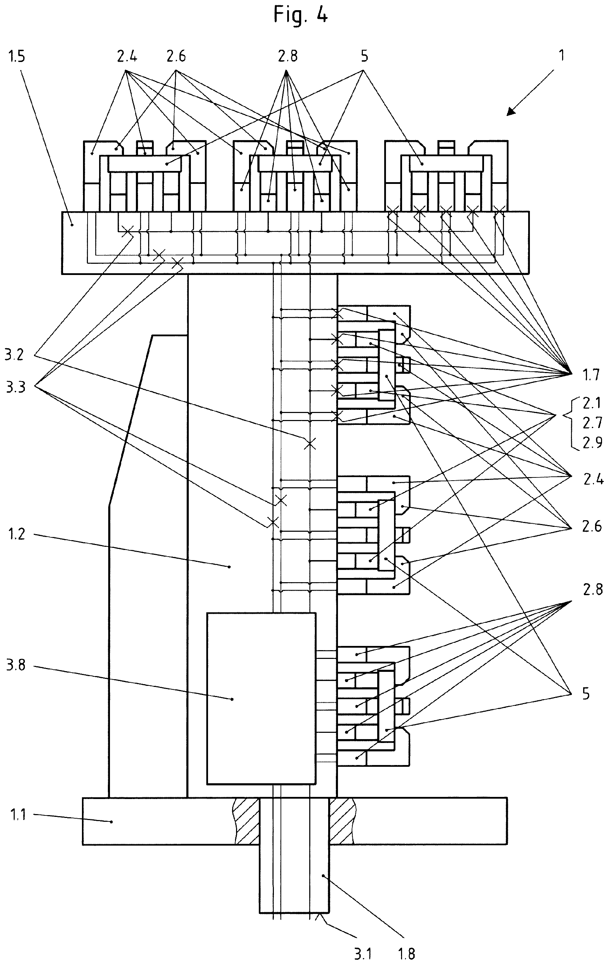

In Fig. 4 ist dargestellt, wie die in dem Werkstück-Spannkörper der in Fig. 3 dargestellten Spannvorrichtung integrierten Leitungssysteme über die von der Druckmedien-Eintrittsstelle 3.1 an der Drehdurchführung 1.8 ausgehenden und dann gezweigten zwei Druckmediennetze 3, hier das Druckmediennetz Außenspannen 3.3 und das Druckmediennetz Positionieren 3.2, über Druck- und Funktionssteuerungs-Ventile 3.8 gesteuert, zeitversetzt über der Druckkammern 2.8 an den Außen-Schwenkspannern 2.4 und an den Positionierelementen 2.1 unter Einsatz von Hydraulik-Öl agieren. Dafür ist die Spannwand 1.2 des Werkstück-Spannkörpers 1 mit den senkrecht verlaufenden als Dünnbohrungen ausgebildeten Leitungen und mit deren waagerecht gerichteten an den Druckkammern 2.8 der Außen-Schwenkspanner 2.4 und der Positionierelemente 2.1 als Bohrungsaustrittstellen 1.7 endenden Anschlussleitungen ausgestattet. Die senkrechten Leitungen setzen sich in der Kopfplatte 1.5 fort und sind Bestandteil waagerechter Leitungssysteme mit wiederum senkrechten Anschlussleitungen, die an den Druckkammern 2.8 der auf der Kopfplatte 1.5 aufliegend angeordneten Außen-Schwenkspannern 2.4 und Positionierelemente 2.1 als Bohrungsaustrittsstellen 1.7 enden.

### Bezugszeichenliste

- 1: Werkstück-Spannkörper
- 1.1: Grundplatte
- 1.2: Spannwand
- 1.3: Zwischenkörper
- 1.4: Spannplatte
- 1.5: Kopfplatte
- 1.6: Dünnbohrungen in 1.1 bis 1.5
- 1.7: Bohrungsaustrittsstellen von 1.6 unter 2.1, 2.2, 2.4, 2.5, 2.8 und 2.9
- 1.8: Drehdurchführung in 1.1 und 4
- 2: bewegliche Funktionselemente
- 2.1: Positionierelemente
- 2.2: Zentrierspanner
- 2.3: Zentrierbacken
- 2.4: Außen-Schwenkspanner
- 2.5: Innenzugspanner
- 2.6: (schwenkbewegliche[r]) Spannhaken an 2.4 und 2.5
- 2.7: Werkstückstützer
- 2.8: Druckkammern
- 2.9: Airsensorik-Zustandsfeststeller
- 3: Druckmediennetz(e) für 2
- 3.1: Druckmedien-Eintrittsstelle
- 3.2: Druckmediennetz Positionieren
- 3.3: Druckmediennetz Außenspannen
- 3.4: Druckmediennetz Innenspannen
- 3.5: Druckmediennetz Stützen
- 3.6: Druckmediennetz Zustandsfeststellungen
- 3.7: Druckmedium-Zweigung(en)
- 3.8: Druck- und Funktionssteuerungs-Ventile
- 4: Werkzeugmaschinentisch
- 5: Werkstück(e)

## Patentansprüche

1. Werkstück-Spannkörper mit integrierten Leitungssystemen um, in die Spannstellen einer Spannvorrichtung eingelegte Werkstücke unter Verwendung von Spanndruckmedien wie Hydraulik-Öl und Druckluft zu positionieren, zu fixieren und ergänzend abzustützen sowie nach der spanenden Bearbeitung die Fixierung der Werkstücke zu lösen und die Werkstücke zu wechseln sowie darüber intelligent den Bediener zu informieren, **dadurch gekennzeichnet,**
**dass** alle in die Grundplatte (1.1), in die Spannwand (1.2) oder in den Zwischenkörper (1.3) mit Spannplatte (1.4) und in die Kopfplatte (1.5) eines Werkstück-Spannkörpers (1) integrierten, zueinander und zu den Außenflächen parallel verlaufend sowie sich kreuzend angeordneten, Leitungen für den Durchlass der Spanndruckmedien tieflochgebohrte, lange und mit zunehmender Bohrungstiefe durchmesserreduzierte Dünnbohrungen (1.6) sind und ein geschlossenes Leitungssystem bilden, welches ausgehend von einer gemeinsamen Druckerzeugungsstelle in einer spanenden Werkzeugmaschine, oder autark in dem Werkstück-Spannkörper (1) der Spannvorrichtung selbst, über eine Drehdurchführung (1.8), im Werkzeugmaschinentisch (4) oder über andere Druckmedien-Eintrittsstellen (3.1) in unabhängig agierende und ventilgesteuert trennbare Druckmediennetze (3) gezweigt ist und ein koordiniert zeitversetztes Agieren aller beweglichen Funktionselementen (2), als Positionierelemente (2.1), Zentrierspanner (2.2), Außen-Schwenkspanner (2.4), Innenzugspanner (2.5) sowie als ergänzende Werkstückstützer (2.7) oder auch als Airsensorik-Zustandsfeststeller (2.9) ausgebildet, funktionell getrennt erfolgt und an den Bohrungsaustrittsstellen (1.7) unmittelbar und druckhaltend abgedichtet mit den Druckkammern (2.8) der beweglichen Funktionselementen (2) druckausgleichend in gleicher Spanndruck-Dimension leitungsverbunden sind.

2. Werkstück-Spannkörper mit integrierten Leitungssystemen nach Patentanspruch 1, **dadurch gekennzeichnet,**
**dass** in ihm die nach Druckmedium-Zweigung (3.7) getrennten Druckmediennetze (3) für die beweglichen Funktionselementen (2) nebeneinander und sich nicht kontaktierend aufgenommen sind und alternativ als
- Druckmediennetz Positionieren (3.2),
- Druckmediennetz Außenspannen (3.3),
- Druckmediennetz Innenspannen (3.4),
- Druckmediennetz Stützen (3.5) sowie
- Druckmediennetz Zustandsfeststellungen (3.6)
abhängig von Anzahl, Art und Dimension der gleichzeitig oder nacheinander zu fertigenden Werkstücke (5) gemeinsam mit den entsprechend der technologischen Fertigungsaufgabe erforderlichen beweglichen und festen Funktionselemente einer bedienarme intelligente Spannvorrichtung bilden und mittels am Werkstück-Spannkörper (1) angeordneten Druck- und FunktionssteuerungsVentilen (3.8) steuerbar sind.

3. Werkstück-Spannkörper mit integrierten Leitungssystemen nach Patentanspruch 1 und 2, **dadurch gekennzeichnet,**
**dass** jeder der schwenkbeweglichen Spannhaken (2.6) eines Außen-Schwenkspanners (2.4) oder eines Innenzugspanners (2.5) fingerartig ausgebildet ist und mit seinem flächigen Druckelement auf dem Werkstück (5) aufliegend gegenüber dem Werkstück (5) einen mittels der Druck- und Funktionssteuerungs-Ventile (3.8) einstellbaren Spanndruck ausübt.

4. Werkstück-Spannkörper mit integrierten Leitungssystemen nach Patentanspruch 1 bis 3, **dadurch gekennzeichnet,**
**dass** ein werkstückbedingt ausgebildeter und angeordneter Zentrierspanner (2.2) mit axial gerichtet mindesten einem Kranz axial federnd abgestützten und radialgerichtet entlang von Führungsnuten linearer geführten Zentrierbacken (2.3) ausgestattet ist und
**dass** über das Druckmediennetz Positionieren (3.2) im Zentrierspanner (2.2), dieser durchgängig über eine Spannplatte (1.4), einen Zwischenkörper (1.3) mittels einer Dünnbohrung (1.6) mit dem Druckmediennetz (3) in der Grundplatte (1.1) des Werkstück-Spannkörpers (1) über eine Druckmedien-Zweigung (3.7) leitungs- und medienverbunden ist.
